# EUROPEAN PATENT SPECIFICATION

(11) **EP 3 495 697 B1**
(45) Date of publication and mention of the grant of the patent: **20.11.2019**
(21) Application number: 18190177.8
(22) Date of filing: 22.08.2018
(51) Int. Cl.: F16H 59/16, F16H 63/50

(54) **STRADDLED VEHICLE**
GRÄTSCHSITZFAHRZEUG
VÉHICULE À ENFOURCHER

(30) Priority: 07.12.2017 JP 2017235055
(43) Date of publication of application: 12.06.2019
(73) Proprietor: Yamaha Hatsudoki Kabushiki Kaisha, Shizuoka-ken 438-8501 (JP)
(72) Inventor: HARATA, Nagatomo, Iwata-shi, Shizuoka-ken, 438-8501 (JP)
(74) Representative: Grünecker Patent- und Rechtsanwälte PartG mbB

(56) References cited:
- US-A- 5 079 969
- US-A- 5 875 679
- US-A1- 2009 178 874
- US-A1- 2015 152 964
- US-A1- 2017 267 250

## Description

The present invention relates to a straddled vehicle according to the preamble of independent claim 1. Such a straddled vehicle can be taken from the prior art documents US 2009/0178874 A1 or JP 2008-232028 A. In particular, the present teaching relates to a straddled vehicle capable of adjusting an output of an engine in order to switch a gear ratio of a transmission.

At a race or the like, a quick gear shift is required. Therefore, a rider sometimes carries out a gear shift without performing a clutch operation (hereinafter referred to as clutchless shifting). In this case, because the gear shift is carried out with motive power transmitted from a crankshaft to a main shaft, it is difficult to separate gears. As such, a system for carrying out the output adjustment of the engine has been developed such that the gears can be separated easily during the clutchless shifting.

For example, in a transmission control device of a vehicle described in JP 2008-232028 A, it is determined that a rider has started the shift operation based on a displacement amount and a displacement speed when a shift pedal is displaced in a play range. Specifically, when the displacement amount of the shift pedal exceeds a predetermined displacement reference value, and the displacement speed of the shift pedal exceeds a speed reference value, it is determined that the rider has started the shift operation. When it is determined that the shift operation has started, the output of the engine is adjusted.

During the travel of the vehicle, the rider sometimes switches a driving posture depending on a state of a road surface, a shape of a course or the like. In this case, because the rider moves his or her foot on the shift pedal when changing the driving posture, the shift pedal may be displaced in the play range. Further, depending on the state of the road surface on which the vehicle travels, the shift pedal may be displaced in the play range due to the vibration generated in the vehicle when the rider's foot is not on the shift pedal. Therefore, it is actually difficult to accurately determine when the shift operation is started based on the displacement amount and the displacement speed of the shift pedal.

An object of the present invention is to provide a straddled vehicle and a method for controlling a straddled vehicle that can appropriately carry out output adjustment of an engine in order to switch a gear ratio of a transmission by accurately determining whether a shift operation intended by the rider has been performed.

According to the present invention said object is solved by a straddled vehicle according to independent claim 1. Preferred embodiments are laid down in the dependent claims.
(1) A straddled vehicle according to one aspect includes an engine, a drive wheel, a transmission that transmits a torque generated by the engine to the drive wheel, an operation member that is operated by a rider in order to switch a gear ratio of the transmission, a load sensor that detects a load applied to the operation member by the rider, a measurer that measures a time length from a time point at which the load detected by the load sensor exceeds a first threshold value until a time point at which the load detected by the load sensor exceeds a second threshold value larger than the first threshold value as an operation time length, a shift determiner that determines that an operation of the operation member by the rider is a shift operation for switching the gear ratio of the transmission when the operation time length measured by the measurer is equal to or shorter than a first time length, and determines that the operation of the operation member by the rider is not the shift operation when the operation time length measured by the measurer is longer than the first time length, and a controller that adjusts an output of the engine in order to switch the gear ratio of the transmission when the shift determiner determines that the operation of the operation member by the rider is the shift operation.
   When performing the shift operation for switching the gear ratio of the transmission, the rider tends to apply a relatively large load to the operation member in a relatively short period of time. In the above-mentioned configuration, the operation time length from the time point at which the load detected by the load sensor exceeds the first threshold value until the time point at which the load detected by the load sensor exceeds the second threshold value that is larger than the first threshold value is measured by the measurer. When the measured operation time length is equal to or shorter than the first time length, it is determined that the operation of the operation member by the rider is the shift operation. When the measured operation time length is longer than the first time length, it is determined that the operation of the operation member by the rider is not the shift operation. Thus, the unintended operation of the operation member by the rider is prevented from being erroneously determined as the shift operation.
   As a result, whether the shift operation intended by the rider has been performed is accurately determined, and the output adjustment of the engine for switching the gear ratio of the transmission can be appropriately carried out.
(2) The load sensor may have a dead zone, and an absolute value of the first threshold value may be equal to or larger than an absolute value of a maximum value of the dead zone.
   In this case, even when the load sensor has the dead zone, an unintended operation of the operation member by the rider is prevented from being erroneously determined as the shift operation. Thus, it is not necessary to use an expensive load sensor not having the dead zone. Therefore, an increase in cost by the load sensor is inhibited.
(3) The measurer may include a load determiner that determines that the load detected by the load sensor has exceeded the second threshold value when the load detected by the load sensor has been larger than the second threshold value for a second time length that is shorter than the first time length.
   In this case, whether the load detected by the load sensor has exceeded the second threshold value is prevented from being erroneously determined due to noise and so on.
(4) The operation member may be configured to be operable by the rider in a first direction for a downshift of the transmission, and may be configured to be operable by the rider in a second direction that is different from the first direction for an upshift of the transmission, the load sensor may be configured to detect a load applied in the first direction as a first load, and may be configured to detect a load applied in the second direction as a second load, the first threshold value may include a first downshift threshold value and a first upshift threshold value, the second threshold value may include a second downshift threshold value and a second upshift threshold value, the first time length may include a downshift reference time length and an upshift reference time length, the measurer may measure a time length from a time point at which the first load detected by the load sensor exceeds the first downshift threshold value until a time point at which the first load detected by the load sensor exceeds the second downshift threshold value as a first operation time length, and may measure a time length from a time point at which the second load detected by the load sensor exceeds the first upshift threshold value until a time point at which the second load detected by the load sensor exceeds the second upshift threshold value as a second operation time length, and the shift determiner may determine that the operation of the operation member by the rider is a shift operation for the downshift when the first operation time length measured by the measurer is equal to or shorter than the downshift reference time length, may determine that the operation of the operation member by the rider is not the shift operation for the downshift when the first operation time length measured by the measurer is longer than the downshift reference time length, may determine that the operation of the operation member by the rider is a shift operation for the upshift when the second operation time length measured by the measurer is equal to or shorter than the upshift reference time length, and may determine that the operation of the operation member by the rider is not the shift operation for the upshift when the second operation time length measured by the measurer is longer than the upshift reference time length.
   In this case, it is determined accurately that the shift operation for the downshift intended by the rider has been performed, and it is determined accurately that the shift operation for the upshift intended by the rider has been performed. Thus, the output adjustment of the engine for each of the downshift and upshift of the transmission is carried out appropriately.
(5) The operation member may be a shift pedal. In this case, the load applied to the shift pedal by the rider is detected by the load sensor.

### BRIEF DESCRIPTION OF THE SEVERAL VIEWS OF THE DRAWING

Fig. 1 is a side view of a motorcycle according to one preferred embodiment;
Fig. 2 is a diagram for explaining schematic configurations of a transmission and a shift mechanism provided in a mission case of Fig. 1;
Figs. 3(a) and 3(b) are schematic diagrams for explaining a mechanism of transmitting a torque, that has been transmitted to a main shaft, to a drive shaft;
Fig. 4 is a left side view of the motorcycle showing a first link mechanism, a shift pedal and their peripheral members of Fig. 1;
Fig. 5 is a diagram showing one example of an output signal of a load sensor during a shift operation for a downshift;
Fig. 6 is a diagram showing one example of an output signal of the load sensor during a shift operation for an upshift;
Fig. 7 is a diagram showing one example of an output signal of the load sensor during a non-shift operation;
Figs. 8(a) to 8(c) are diagrams showing a relationship between a dog hole of a fixed gear and a dog of a slide gear in the transmission;
Fig. 9 is a diagram showing one example of driving state determination data stored in an ECU;
Fig. 10 is a diagram showing schematic configurations of an engine and its peripheral members, and a control system of the motorcycle;
Fig. 11 is a flow chart showing one example of a control operation in the ECU; and
Fig. 12 is a flow chart showing one example of the control operation in the ECU.

### DESCRIPTION OF THE PREFERRED EMBODIMENTS

A straddled vehicle according to one preferred embodiment will be described below with reference to drawings. In the following description, a motorcycle will be described as one example of the straddled vehicle.

### [1] Schematic Configuration of Motorcycle

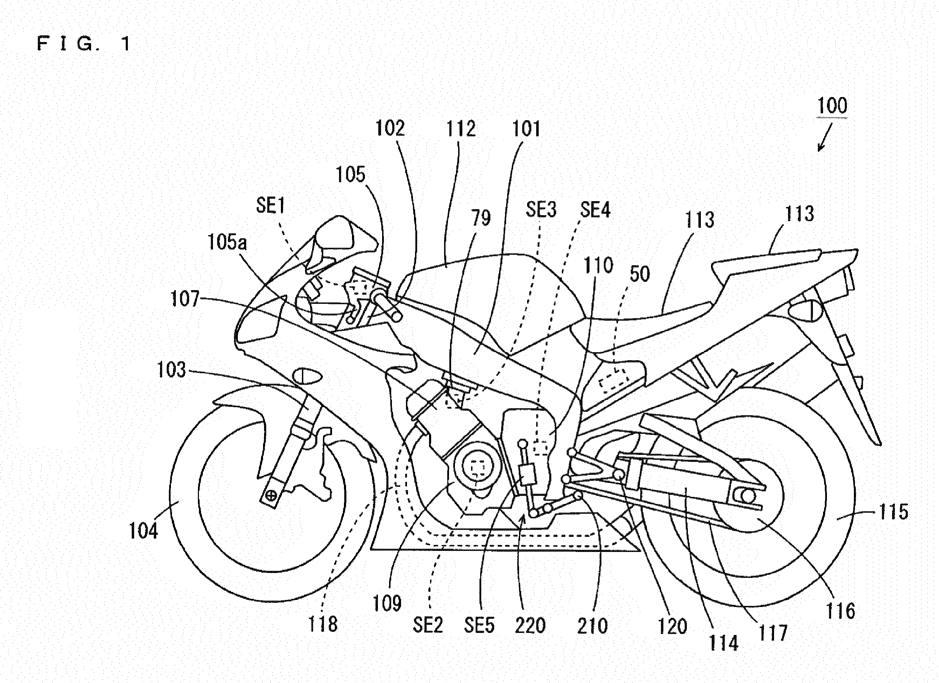

Fig. 1 is a side view of the motorcycle according to the one preferred embodiment. In the motorcycle 100 of Fig. 1, a head pipe 102 is provided at a front end of a body frame 101. A front fork 103 is provided at the head pipe 102 to be swingable in a left-and-right direction. A front wheel 104 is supported at a lower end of the front fork 103 to be rotatable. A handle 105 is provided at an upper end of the head pipe 102.

A clutch lever 105a, an accelerator grip (not shown) and an accelerator sensor SE1 are provided at the handle 105. The accelerator sensor SE1 detects an amount of operation of the accelerator grip (hereinafter referred to as an accelerator opening) by a rider. A clutch sensor (not shown) that detects an amount of operation of the clutch lever 105a by the rider is further provided at the handle 105.

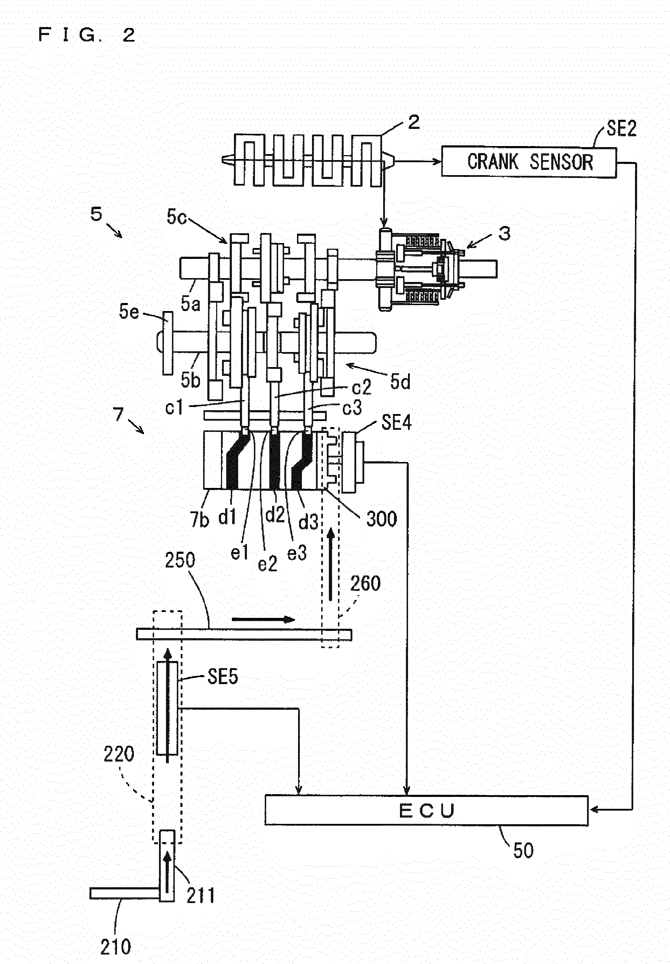

As shown in Fig. 1, the body frame 101 supports an engine 107. An intake pipe 79 and an exhaust pipe 118 are attached to the engine 107. A crankcase 109 is provided at a lower portion of the engine 107. A crank sensor SE2 is provided in the crankcase 109. The crank sensor SE2 detects a rotation angle of a crankshaft 2 (Fig. 2) of the engine 107.

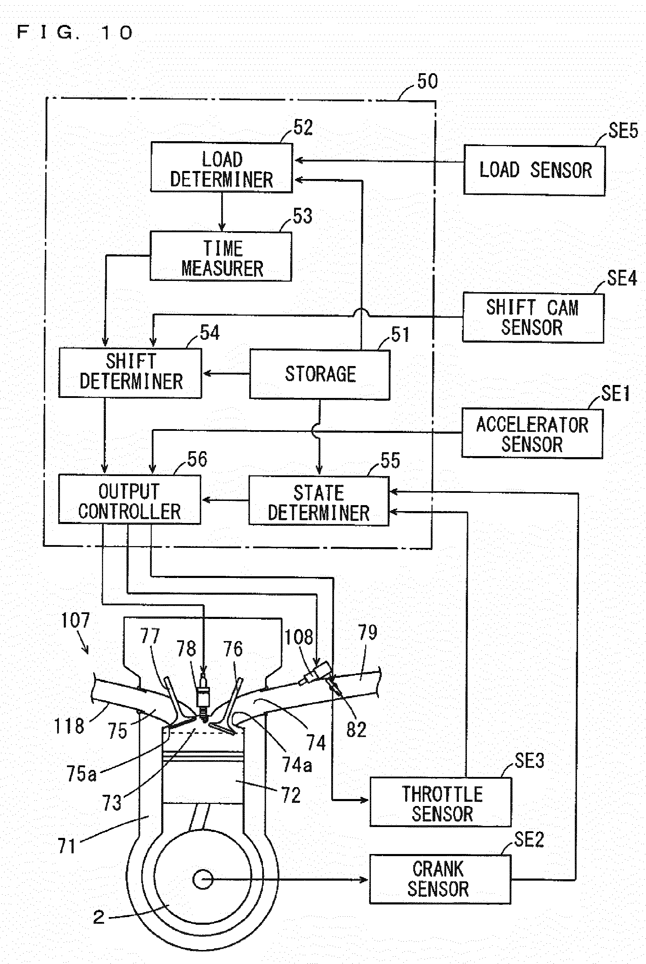

Further, a throttle sensor SE3 is provided in the intake pipe 79. The throttle sensor SE3 detects a degree of opening of an ETV (Electronic Throttle Valve) 82 (Fig. 10), described below.

A mission case 110 is attached to a rear portion of the crankcase 109. A shift cam sensor SE4, a below-mentioned transmission 5 (Fig. 2) and a below-mentioned shift mechanism 7 (Fig. 2) are provided in the mission case 110. The shift cam sensor SE4 detects a rotation angle of a below-mentioned shift cam 7b (Fig. 2).

A shift pedal 210 is provided at a side portion of the mission case 110. The shift pedal 210 is integrally attached to a below-mentioned pedal arm 211 (Fig. 2). A back step 120 is provided at a position farther rearward than the shift pedal 210. The back step 120 is supported by the body frame 101.

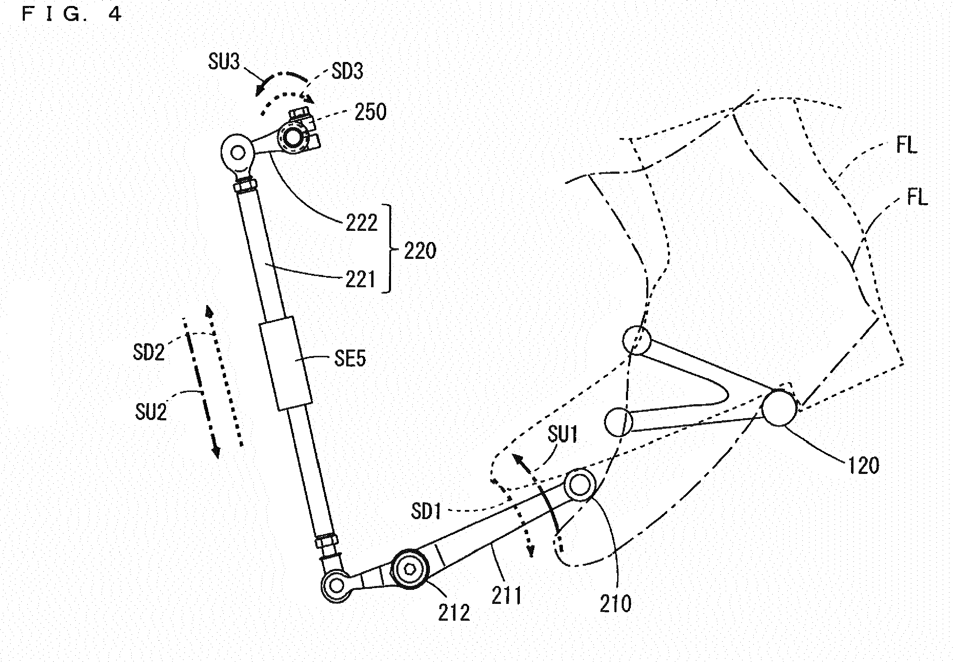

Further, a first link mechanism 220 is provided at a side portion of the mission case 110. A load sensor SE5 is provided at the first link mechanism 220. The rider operates the shift pedal 210 by applying a load to the shift pedal 210. When the rider operates the shift pedal 210, the load sensor SE5 detects the load applied to a first link shaft 221 (Fig. 4), described below.

A fuel tank 112 is provided above the engine 107. Two seats 113 are provided to be arranged in a front-and-rear direction at positions farther rearward than the fuel tank 112. An ECU (Electronic Control Unit) 50 is provided below a front seat 113.

An ECU 50 includes a CPU (Central Processing Unit), a ROM (Read Only Memory) and a RAM (Random Access Memory). The ROM is made of a non-volatile memory, for example, and stores a system program, a control program of the CPU and the like. The RAM is made of a volatile memory, for example, is used as a work area of the CPU, and stores various data temporarily. The CPU executes the control program stored in the ROM to implement various functions. Details of various functions implemented by the CPU will be described below.

A rear arm 114 is connected to the body frame 101 to extend to a position farther rearward than the engine 107. The rear arm 114 rotatably supports a rear wheel 115 and a rear wheel driven sprocket 116. A chain 117 is wound around the rear driven sprocket 116 and a below-mentioned rear wheel drive sprocket 5e (Fig. 2).

### [2] Transmission and Shift Mechanism

Fig. 2 is a diagram for explaining schematic configurations of the transmission 5 and the shift mechanism 7 provided in the mission case 110 of Fig. 1. As shown in Fig. 2, the transmission 5 includes a main shaft 5a and a drive shaft 5b. The main shaft 5a is connected to a clutch 3. A plurality of gears 5c are attached to the main shaft 5a, and a plurality of gears 5d and a rear wheel drive sprocket 5e are attached to the drive shaft 5b.

For example, the torque of the crankshaft 2 generated by the engine 107 of Fig. 1 is transmitted to the clutch 3. When the clutch 3 is in a connected state, the torque that has been transmitted to the clutch 3 is transmitted to the main shaft 5a of the transmission 5. The torque that has been transmitted to the main shaft 5a is transmitted to the drive shaft 5b via the gears 5c, 5d. The torque that has been transmitted to the drive shaft 5b is transmitted to the rear wheel 115 (Fig. 1) via the rear wheel drive sprocket 5e, the chain 117 (Fig. 1) and the rear wheel driven sprocket 116 (Fig. 1). Thus, the rear wheel 115 is rotated. During an operation of the engine 107, the rotation angle of the crankshaft 2 detected by the crank sensor SE2 is output to the ECU 50.

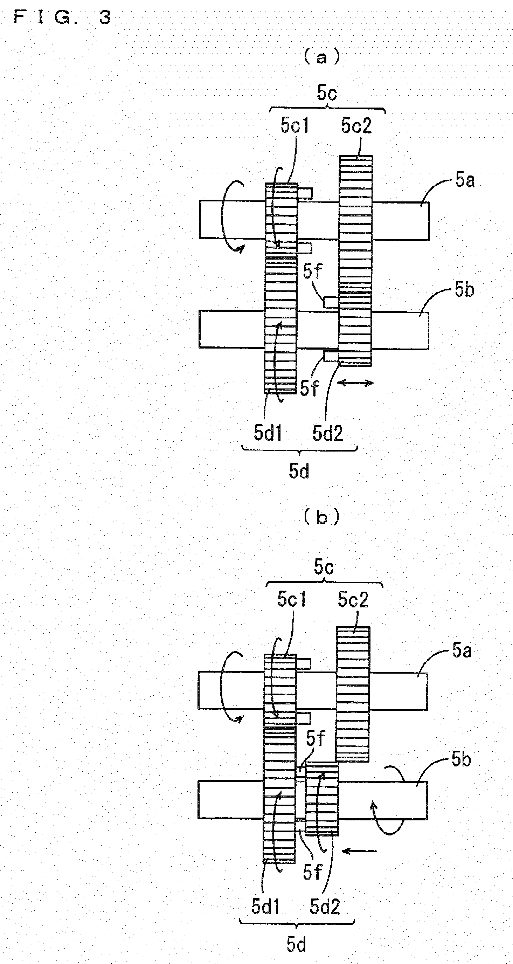

Figs. 3(a) and 3(b) are schematic diagrams for explaining the mechanism of transmission of the torque, that has been transmitted to the main shaft 5a, to the drive shaft 5b. Figs. 3(a) and 3(b) show two gears 5c1, 5c2 out of the plurality of gears 5c and two gears 5d1, 5d2 out of the plurality of gears 5d.

While being movable in an axial direction of the main shaft 5a, the gear 5c1 is fixed to the main shaft 5a in a rotation direction of the main shaft 5a. The gear 5c2 is rotatably attached to the main shaft 5a while being prevented from moving in the axial direction of the main shaft 5a.

The gear 5d1 is rotatably attached to the drive shaft 5b while being prevented from moving in an axial direction of the drive shaft 5b. In the case where the gear 5c1 and the gear 5d1 are engaged, the gear 5d1 is rotated by the rotation of the main shaft 5a.

While being movable in the axial direction of the drive shaft 5b, the gear 5d2 is fixed to the drive shaft 5b in the rotation direction of the drive shaft 5b. Therefore, the drive shaft 5b rotates when the gear 5d2 rotates.

As shown in Fig. 3(a), when the gear 5d2 is separated from the gear 5d1, the gear 5d1 is not fixed to the drive shaft 5b in the rotation direction of the drive shaft 5b. In this case, when the main shaft 5a rotates, the gear 5d1 rotates in conjunction with the rotation of the main shaft 5a. However, the drive shaft 5b rotates not in conjunction with the rotation of the main shaft 5a or stops. That is, the transmission 5 does not transmit a torque between the engine 107 and the rear wheel 115.

On the other hand, as shown in Fig. 3(b), the gear 5d2 moves in the axial direction to become closer to the gear 5d1. Thus, when convex-shape dogs 5f provided on a side surface of the gear 5d2 are fitted into recess-shape dog holes (not shown) provided in a side surface of the gear 5d1, the gear 5d1 and the gear 5d2 are fixed. In this case, when the main shaft 5a rotates, the gear 5d2 rotates together with the gear 5d1 in conjunction with the rotation of the main shaft 5a. Thus, the drive shaft 5b rotates together with the gear 5d2 in conjunction with the rotation of the main shaft 5a.

In the case where the plurality of gears are in a state shown in Fig. 3(a), then the gear 5c1 is brought closer to the gear 5c2, and the gear 5c1 and the gear 5c2 are fixed, the gear 5c2 rotates together with the gear 5c1. In this case, the gear 5d2 rotates in conjunction with the rotation of the main shaft 5a and the gear 5c2. Thus, the drive shaft 5b rotates together with the gear 5d2 in conjunction with the rotation of the main shaft 5a. Hereinafter, a gear that moves on the main shaft 5a or the drive shaft 5b in the axial direction similarly to the gears 5c1, 5d2 is referred to as a slide gear. Further, a gear that is prevented from moving in the axial direction of the main shaft 5a or the drive shaft 5b similarly to the gears 5c2, 5d1 is referred to as a fixed gear.

In this manner, in the transmission 5, one or a plurality of slide gears are moved, and a combination of one or a plurality of slide gears and one or a plurality of fixed gears is changed. Thus, the transmission path of a torque from the main shaft 5a to the drive shaft 5b can be changed. Thus, the rotation speed of the drive shaft 5b can be changed relative to the rotation speed of the main shaft 5a.

In the transmission 5, the shift mechanism 7 of Fig. 2 is used in order to move the one or plurality of slide gears. As shown in Fig. 2, the shift mechanism 7 includes the shift pedal 210, the pedal arm 211, the first link mechanism 220, a shift shaft 250, a second link mechanism 260, a stopper plate 300, the shift cam 7b and shift forks c1 to c3.

As described below, the rider pushes down or lifts up the shift pedal 210. In this case, as indicated by thick arrows in Fig. 2, the load applied to the shift pedal 210 is transmitted to the shift shaft 250 via the pedal arm 211 and the first link mechanism 220. Thus, the shift shaft 250 rotates. Further, the torque generated in the shift shaft 250 is transmitted to the shift cam 7b via the second link mechanism 260. Thus, the shift cam 7b is rotated.

Cam grooves d1 to d3 are formed in the shift cam 7b. The shift forks c1 to c3 are coupled to the cam grooves d1 to d3 by slide pins e1 to e3, respectively. The stopper plate 300 is attached to one end of the shift cam 7b. Further, the shift cam sensor SE4 is provided in the vicinity of one end of the shift cam 7b to be in close proximity to the stopper plate 300. During the operation of the engine 107, the rotation angle of the shift cam 7b detected by the shift cam sensor SE4 is output to the ECU 50.

When the shift cam 7b rotates by the operation of the shift pedal 210 by the rider, the slide pins e1 to e3 coupled to the shift forks c1 to c3 move in the cam grooves d1 to d3. In this case, any one of the shift forks c1 to c3 is moved in the axial direction of the shift cam 7b, and the one or plurality of slide gears are moved.

The transmission 5 of the present example has a neutral position and first to sixth gear positions. When the shift cam 7b (Fig. 2) rotates in one direction, the gear position of the transmission 5 is sequentially switched to the first, second, third, fourth, fifth and sixth gear positions. Thus, a gear ratio of the transmission 5 sequentially increases (an upshift). On the other hand, when the shift cam 7b (Fig. 2) rotates in the opposite direction, the gear position of the transmission 5 is sequentially switched to the sixth, fifth, fourth, third, second and first gear positions. Thus, the gear ratio of the transmission 5 sequentially decreases (a downshift).

Here, the rider sometimes operates the shift pedal 210 with the intent of so-called clutchless shifting, that is, the switch of the gear ratio of the transmission 5 without an operation of the clutch lever 105a of Fig. 1. In the following description, the operation of the shift pedal 210 by the rider who has the intent of switching the gear ratio of the transmission 5 is referred to as a shift operation. In the present embodiment, whether the shift operation has been performed is determined based on an output signal from the load sensor SE5 of Fig. 2. Details of a method of determining whether the shift operation has been performed will be described below. When the shift operation is performed without the operation of the clutch lever 105a, the output adjustment of the engine 107 for switching the gear ratio of the transmission 5 is suitably carried out.

Whether the shift operation has been performed is determined when the clutch 3 is in the connected state. Whether the clutch 3 is in the connected state can be determined based on whether a detection value of the above-mentioned clutch sensor has exceeded a predetermined value, for example.

### [3] Operation Example of Shift Pedal by Rider and Detection of Load by Load Sensor

Fig. 4 is a left side view of the motorcycle 100 showing the first link mechanism 220 and the shift pedal 210 of Fig. 1, and their peripheral members. As shown in Fig. 4, in the left side view of the motorcycle 100, the pedal arm 211 is provided to extend in the front-and-rear direction. The shift pedal 210 is attached to the rear end of the pedal arm 211.

An attachment portion 212 is provided at a portion that is slightly closer to the front end than the center portion of the pedal arm 211. The attachment portion 212 of the pedal arm 211 is supported at a support shaft (not shown) extending horizontally leftward from the body frame 101 (Fig. 1) to be rotatable.

The shift shaft 250 is arranged above the pedal arm 211. The first link mechanism 220 is provided to connect the pedal arm 211 to the shift shaft 250. Specifically, the first link mechanism 220 includes the first link shaft 221 and a second link shaft 222. One end of the second link shaft 222 is fixed to the shift shaft 250 such that the second link shaft 222 is rotatable together with the shift shaft 250 and extends forward of the vehicle from the shift shaft 250. One end of the first link shaft 221 is connected to the front end of the pedal arm 211 to be rotatable. The other end of the first link shaft 221 is connected to the other end of the second link shaft 222 to be rotatable.

The load sensor SE5 is provided at the substantially center portion of the first link shaft 221. The load sensor SE5 is made of an elastic type (a strain gauge type, an electrostatic capacitance type and the like) or a magnetostriction-type load cell, for example, and is configured to be able to detect a tensile load and a compressive load that are applied to the first link shaft 221. Further, the load sensor SE5 of the present example has a dead zone where the detection value (voltage value), corresponding to the applied load when the load is applied to the shift pedal 210, is not output. The load corresponding to the dead zone of the load sensor SE5 is referred to as a dead zone load. When the load applied to the shift pedal 210 is the dead zone load, the detection value of the load detected by the load sensor SE5 is 0.

While placing his or her left foot on the back step 120, the rider operates the shift pedal 210 by pushing down or lifting up the shift pedal 210 with the back step 120 as a supporting point.

A return-type transmission method is employed in the shift mechanism 7 of Fig. 2. In the shift mechanism 7, when the shift pedal 210 is lifted up, an operation for the upshift from the first position to the sixth position is performed. Further, when the shift pedal 210 is pushed down, the operation for switching the gear position from the neutral position to the first position or the operation for the downshift from the sixth to first position is performed.

Here, as indicated by a thick one-dot and dash arrow SU1 in Fig. 4, when the shift pedal 210 is lifted up by the rider's left foot FL, the pedal arm 211 rotates in a counterclockwise direction. Thus, as indicated by a thick one-dot and dash arrow SU2, one end (lower end) of the first link shaft 221 is pulled downward. Further, as indicated by a thick one-dot and dash arrow SU3, the second link shaft 222 rotates about the shift shaft 250 in the counterclockwise direction. At this time, a tensile load is applied to the first link shaft 221. The tensile load is detected by the load sensor SE5 and output to the ECU 50 of Fig. 2. In the load sensor SE5, a detection value (voltage value) of the tensile load is 0 or a positive value.

On the other hand, as indicated by a thick dotted arrow SD1 in Fig. 4, when the shift pedal 210 is pushed down by the rider's left foot FL, the pedal arm 211 rotates in a clockwise direction. Thus, as indicated by a thick dotted arrow SD2, one end (lower end) of the first link shaft 221 is lifted up. Further, as indicated by a thick dotted arrow SD3, the second link shaft 222 rotates about the shift shaft 250 in the clockwise direction. At this time, a compressive load is applied to the first link shaft 221. The compressive load is detected by the load sensor SE5 and output to the ECU 50 of Fig. 2. In the load sensor SE5, a detection value (voltage value) of the compressive load is 0 or a negative value.

### [4] Method of Determining Whether Shift Operation Has Been Performed

In the following description, the operation, of applying a load exceeding the dead zone load to the shift pedal 210 without the intent of switching the gear ratio of the transmission 5, that is performed by the rider is referred to as a non-shift operation. The non-shift operation is equivalent to the operation, of involuntarily stamping on the shift pedal 210 with the rider's left foot, that is performed by an unskilled rider or a rider who is nervous at the race, for example. Alternatively, the non-shift operation is equivalent to the operation, of stamping on the shift pedal 210 with the rider's left foot without the intent of switching the gear ratio of the transmission 5, that is performed by a rider who is accustomed to a straddled vehicle not having an output adjustment function of an engine for the clutchless shifting or a rider without the knowledge of the clutchless shifting.

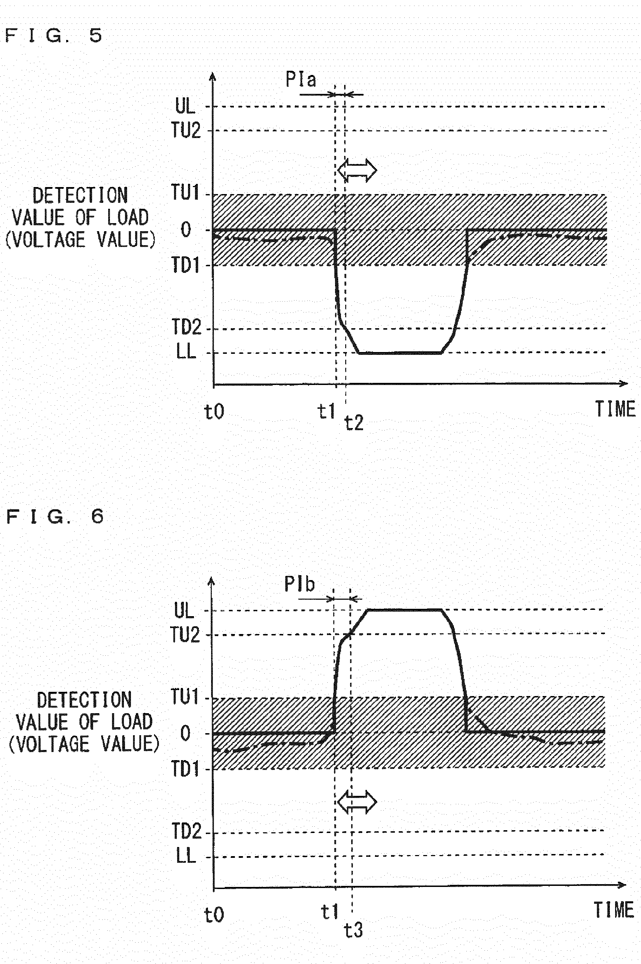

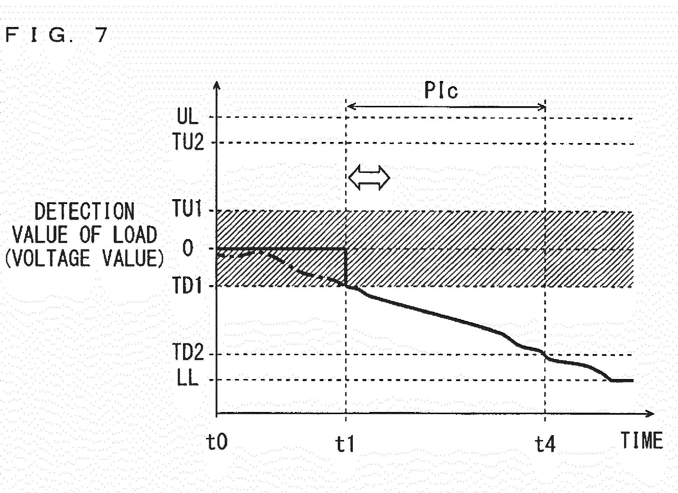

Fig. 5 is a diagram showing one example of the output signal of the load sensor SE5 during the shift operation for the downshift, Fig. 6 is a diagram showing one example of the output signal of the load sensor SE5 during the shift operation for the upshift, and Fig. 7 is a diagram showing one example of the output signal of the load sensor SE5 during the non-shift operation.

In Figs. 5 to 7, the ordinates indicate the detection value of the load (voltage value) by the load sensor SE5, and the abscissas indicate the time. Further, detection upper limit values and detection lower limit values of the load sensor SE5 are indicated by reference characters UL, LL, respectively, and the dead zones of the load sensor SE5 are indicated by hatching. Further, the output signals of the load sensor SE5 are indicated by wave-form thick solid lines, and the output signals of the load sensor SE5 when there is assumably no dead zone are indicated by thick wave-form one-dot and dash lines.

In the example of Fig. 5, from a time point t0 to a time point t1, the detection value to be output is in the dead zone as indicated by the thick one-dot and dash line. Therefore, the detection value of the load is maintained at 0. The rider starts the shift operation for the downshift at the time point t1. In this case, when the shift pedal 210 is pushed down, a large compressive load is applied to the shift pedal 210 abruptly. Thus, the detection value of the load reaches the detection lower limit value LL from 0 in a short period of time (100 ms or less, for example). Thereafter, in the case where the shift pedal 210 has been moved downward by a certain amount, the rider ends the shift operation. Thus, the detection value of the load returns to 0.

Also in the example of Fig. 6, from the time point t0 to the time point t1, the detection value of the load is maintained at 0 from the time point t0 to the time point t1 similarly to the example of Fig. 5. The rider starts the shift operation for the upshift at the time point t1. In this case, when the shift pedal 210 is lifted up, a large tensile load is applied to the shift pedal 210 abruptly. Thus, the detection value of the load reaches the detection upper limit value UL from 0 in a short period of time (100 ms or less, for example). Thereafter, in the case where the shift pedal 210 has been moved upward by a certain amount, the rider ends the shift operation. Thus, the detection value of the load returns to 0.

Also in the example of Fig. 7, from the time point t0 to the time point t1, the detection value of the load is maintained at 0 similarly to the example of Fig. 5. The non-shift operation is started by the rider at the time point t1. In this case, the compressive load exceeds the load corresponding to the dead zone at the time point t1, so that the detection value of the load changes from 0 to a negative value. At this time, because not intending to switch the gear ratio of the transmission 5 during the non-shift operation, the rider does not perform an operation of actively moving the shift pedal 210. Therefore, a large load is not applied to the shift pedal 210 abruptly. However, the rider who is performing the non-shift operation is not at all recognizing how much load he or she is applying to the shift pedal 210. Alternatively, the rider who is performing the non-shift operation considers that the gear ratio is not switched even when he or she stamps on the shift pedal 210 unless he or she operates at least one of the clutch lever 105a and the accelerator grip of Fig. 1. Therefore, a relatively large load is likely to be applied to the shift pedal 210 gently. Therefore, it is difficult to determine whether the operation of the shift pedal 210 by the rider is the shift operation or the non-shift operation based on only whether the load applied to the shift pedal 210 has exceeded a certain threshold value. In the present example, at a time point later than the time point t1, the detection value of the load gently changes towards the detection lower limit value LL in a region lower than the dead zone in the diagram while taking a relatively long period of time (about 1000 ms, for example).

As described above, when performing the shift operation, the rider tends to apply a relatively large load to the shift pedal 210 in a relative short period of time. On the other hand, when performing the non-shift operation, the rider tends to apply a load to the shift pedal 210 gently. In the present embodiment, whether the shift operation intended by the rider has been performed is determined as described below in consideration of these tendencies.

First, as indicated by the ordinates of Figs. 5 to 7, a first downshift threshold value TD1, a second downshift threshold value TD2, a first upshift threshold value TU1 and a second upshift threshold value TU2 are preset in the ECU 50 of Fig. 2 regarding the load detected by the load sensor SE5. Further, as indicated by outlined arrows in Figs. 5 to 7, a predetermined length of a reference time length is preset.

The first downshift threshold value TD1 and the second downshift threshold value TD2 are negative values. Further, an absolute value of the second downshift threshold value TD2 is larger than an absolute value of the first downshift threshold value TD1 and smaller than an absolute value of the detection lower limit value LL. Further, the first downshift threshold value TD1 is set equal to or smaller than a minimum value of the dead zone. The first downshift threshold value TD1 of the present example is set to the minimum value of the dead zone.

The first upshift threshold value TU1 and the second upshift threshold value TU2 are positive values. Further, an absolute value of the second upshift threshold value TU2 is larger than an absolute value of the first upshift threshold value TU1 and smaller than an absolute value of the detection upper limit value UL. Further, the first upshift threshold value TU1 is set equal to or larger than a maximum value of the dead zone. The first upshift threshold value TU1 of the present example is set to the maximum value of the dead zone.

In consideration of a time length normally required for the rider to operate the shift pedal 210 with the intent of switching the gear ratio of the transmission 5, the reference time length is set longer than 100 ms and equal to or shorter than 200 ms.

In determination of whether the shift operation has been performed, whether the detection value of the load is smaller than the first downshift threshold value TD1 or whether the detection value of the load is larger than the first upshift threshold value TU1 is determined first. That is, whether the detection value of the load has exceeded the first downshift threshold value TD1 or the first upshift threshold value TU1 is determined.

When the detection value of the load exceeds the first downshift threshold value TD1, a time length from that time point until the time when the detection value of the load becomes smaller than the second downshift threshold value TD2 is measured as a first operation time length. That is, a time length from the time when the detection value (absolute value) of the load exceeds the first downshift threshold value TD1 (absolute value) until the time when the detection value of the load exceeds the second downshift threshold value TD2 (absolute value) is measured as the first operation time length. Further, whether the measured first operation time length is equal to or shorter than the preset reference time length is determined. As such, when the first operation time length is equal to or shorter than the reference time length, it is determined that the operation of the shift pedal 210 by the rider is the shift operation for the downshift. On the other hand, when the first operation time length is longer than the reference time length, it is determined that the operation of the shift pedal 210 by the rider is not the shift operation but the non-shift operation.

In the example of Fig. 5, the detection value of the load exceeds the first downshift threshold value TD1 at the time point t1, and the detection value of the load exceeds the second downshift threshold value TD2 at the time point t2. Thus, the time length from the time point t1 to the time point t2 is measured as the first operation time length Pla. The measured first operation time length Pla is equal to or shorter than the reference time length indicated by the outlined arrow. Thus, it is determined that the operation of the shift pedal 210 by the rider is the shift operation for the downshift.

In the example of Fig. 7, the detection value of the load exceeds the first downshift threshold value TD1 at the time point t1, and the detection value of the load exceeds the second downshift threshold value TD2 at a time point t4. Thus, the time length from the time point t1 to the time point t4 is measured as the first operation time length Pic. The measured first operation time length Pic is longer than the reference time length indicated by the outlined arrow. Thus, it is determined that the operation of the shift pedal 210 by the rider is the non-shift operation.

When the detection value of the load exceeds the first upshift threshold value TU1, the time length from that time point until the time when the detection value of the load exceeds the second upshift threshold value TU2 is measured as a second operation time length. That is, the time length from the time when the detection value (absolute value) of the load exceeds the first upshift threshold value TU1 (absolute value) until the time when the detection value of the load exceeds the second upshift threshold value TU2 (absolute value) is measured as the second operation time length. Further, whether the measured second operation time length is equal to or shorter than the predetermined reference time length is determined. As such, when the second operation time length is equal to or shorter than the predetermined reference time length, it is determined that the operation of the shift pedal 210 by the rider is the shift operation for the upshift. On the other hand, when the second operation time length is longer than the predetermined reference time length, it is determined that the operation of the shift pedal 210 by the rider is not the shift operation but the non-shift operation.

In the example of Fig. 6, the detection value of the load exceeds the first upshift threshold value TU1 at the time point t1, and the detection value of the load exceeds the second upshift threshold value TU2 at the time point t3. Thus, the time length from the time point t1 to the time point t3 is measured as the second operation time length Plb. The measured second operation time length Plb is equal to or shorter than the reference time length indicated by the outlined arrow. Thus, it is determined that the operation of the shift pedal 210 by the rider is the shift operation for the upshift.

With use of the above-mentioned determination method, the non-shift operation is prevented from being erroneously determined as the shift operation. When it is determined that the shift operation has been performed with the clutch 3 connected, the output adjustment of the engine 107 is carried out according to the state of the engine 107, described below. Thus, the gear ratio of the transmission 5 is smoothly switched.

In the above-mentioned determination method, the reference time length corresponding to the downshift and the reference time length corresponding to the upshift may be set separately to be different from each other. In this case, when the detection value of the load is a negative value, determination with use of the reference time length corresponding to the downshift is made. When the detection value of the load is a positive value, determination with use of the reference time length corresponding to the upshift is made. Thus, whether the shift operation has been performed can be more appropriately determined.

An output signal of the load sensor SE5 is sometimes interrupted due to noise or the like. As such, a short determination time length that is shorter than the reference time length may be set for accurate determination of whether the detection value of the load has exceeded each type of the above-mentioned threshold value. In this case, in the case where the detection value of the load has been larger than the threshold value for the set determination time length, it may be determined that the detection value of the load has exceeded the threshold value.

For example, in the case where the detection value of the load is equal to or smaller than the second upshift threshold value TU2, and then has been maintained larger than the second upshift threshold value TU2 for the determination time length, it may be determined that the detection value of the load has exceeded the second upshift threshold value TU2. Further, in the case where the detection value of the load is equal to or larger than the second downshift threshold value TD2, and then has been maintained smaller than the second downshift threshold value TD2 for the determination time length, it may be determined that the detection value of the load has exceeded the second downshift threshold value TD2. In this case, erroneous determination caused by noise or the like is prevented.

### [5] State of Engine 107

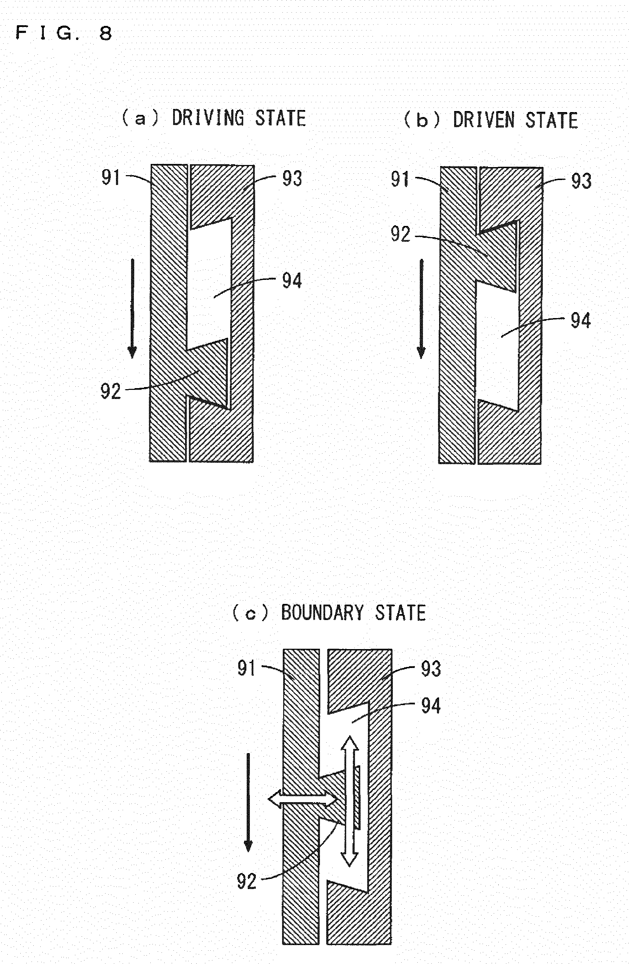

Here, the state of the engine 107 in operation will be described together with the relationship between a dog hole of the fixed gear and a dog of the slide gear in the transmission 5. The relationship between the dog holes of the fixed gear and the dog of the slide gear in the transmission 5 changes according to the state of the engine 107. Figs. 8(a) to 8(c) are diagrams showing the relationship between the dog hole of the fixed gear and the dog of the slide gear in the transmission 5. Figs. 8(a) to 8(c) show schematic cross sectional views of a portion where a dog 92 is formed in the slide gear 91 and a portion where a dog hole 94 is formed in the fixed gear 93. The slide gear 91 and the fixed gear 93 of the present example correspond to the gear 5c1 and the gear 5c2 of Fig. 3, respectively. Further, the portions of the slide gear 91 and the fixed gear 93 shown in Figs. 8(a) to 8(c) move (rotate) in the direction indicated by thick arrows. Further, the clutch 3 of Fig. 2 is in the connected state.

When the motorcycle 100 is accelerated and traveling on an up-hill slope, for example, a torque of the crankshaft 2 (Fig. 3) is transmitted to the drive shaft 5b (Fig. 3). Specifically, the torque transmitted from the crankshaft 2 to the slide gear 91 via the main shaft 5a is further transmitted to the fixed gear 93 and the drive shaft 5b by the dog 92. In this case, as shown in Fig. 8(a), a front side surface of the dog 92 in the moving direction thereof abuts against a front side surface of the dog hole 94 in the moving direction thereof, and a large engaging force is generated between the dog 92 and the dog hole 94. In this manner, the state where a torque is transmitted to the rear wheel 115 via the transmission 5 from the crankshaft 2 is referred to as a driving state of the engine 107.

On the other hand, when the motorcycle 100 is decelerated without using a brake on a down-hill slope, for example, a torque of the drive shaft 5b is transmitted to the crankshaft 2. Specifically, the torque transmitted from the drive shaft 5b to the fixed gear 93 is further transmitted to the slide gear 91 and the main shaft 5a by the dog 92. In this case, as shown in Fig. 8(b), a rear side surface of the dog 92 in the moving direction thereof abuts against a rear side surface of the dog hole 94 in the moving direction thereof, and a large engaging force is generated between the dog 92 and the dog hole 94. In this manner, the state where a torque is transmitted from the rear wheel 115 to the crankshaft 2 via the transmission 5 is referred to as a driven state. The driven state of the engine 107 is the state of the engine 107 where so-called engine braking is in operation.

When the state of the engine 107 is not either the driving state or the driven state, a torque is hardly transmitted between the crankshaft 2 and the drive shaft 5b. In this case, the rotation speed of the dog 92 and the rotation speed of the dog hole 94 are substantially equal to each other, so that a large engaging force is not generated between the dog 92 and the dog hole 94. Thus, as indicated by outlined arrows in Fig. 8(c), the dog 92 is movable in the rotation direction and the axial direction of the main shaft 5a with respect to the dog hole 94. In this manner, the state where a torque is not transmitted between the crankshaft 2 and the rear wheel 115 is referred to as a boundary state of the engine 107. The output adjustment of the engine 107 is carried out to bring the engine 107 being in the driving state or the driven state close to being in the boundary state.

### [6] Method of Determining State of Engine 107

In the motorcycle 100 according to the present embodiment, whether the output adjustment of the engine 107 is carried out is determined according to a combination of the type of the shift operation and the state of the engine 107.

Specifically, in the case where the shift operation for the downshift is performed, the output adjustment of the engine 107 for the downshift is carried out when the engine 107 is in the driven state, and is not performed when the engine 107 is in the driving state and the boundary state. Because the output adjustment is not carried out when the engine 107 is in the driving state, an occurrence of an abrupt switch from the driving state to the driven state right after the downshift is reduced. Thus, application of an excessive load to the transmission 5 is reduced. Therefore, the useful life of the transmission 5 is prolonged. Further, in the case where the engine 107 is in the boundary state at a time point at which the shift operation is performed, the rider is likely to be adjusting the accelerator opening with the intent of the clutchless shifting. Thus, the output adjustment is not carried out when the engine 107 is in the boundary state, whereby the gear ratio can be switched by skill of the rider.

Further, in the case where the shift operation for the upshift is performed, the output adjustment of the engine 107 for the upshift is carried out when the engine 107 is in the driving state, and is not performed when the engine 107 is in the driven state and the boundary state. The output adjustment is not carried out when the engine 107 is in the driven state, whereby an abrupt increase in speed of the motorcycle 100 is prevented when the engine 107 is in the driven state. Further, the output adjustment is not carried out when the engine 107 is in the boundary state, whereby the gear ratio can be switched by the skill of the rider.

As such, in the ECU 50 of Fig. 2, whether the shift operation has been performed is determined, and which state out of the driving state, the boundary state and the driven state the engine 107 is in is determined. Specifically, which state out of the driving state, the boundary state and the driven state the engine 107 is in is determined based on the data (hereinafter referred to as driving state determination data) indicating the relationship between the rotation speed of the engine 107 when no load is applied, and a throttle opening of an ETV 82 (Fig. 10), described below.

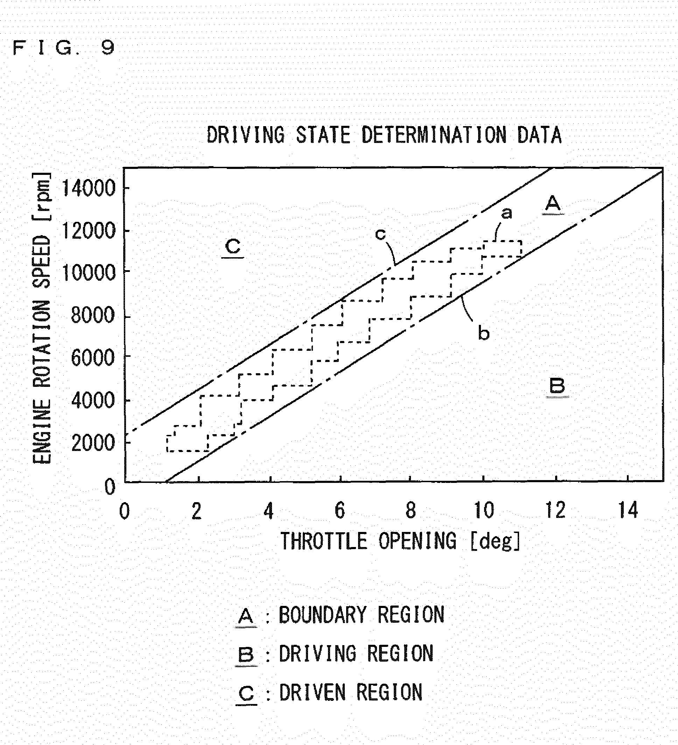

Fig. 9 is a diagram showing one example of the driving state determination data stored in the ECU 50. In Fig. 9, the ordinate indicates the rotation speed of the engine 107, and the abscissa indicates the throttle opening of the ETV 82.

In Fig. 9, a dotted line 'a' indicates the relationship between the rotation speed of the engine 107 and the throttle opening when the transmission 5 does not transmit a torque because the gears 5c, 5d (Fig. 2) are not engaged. As shown in Fig. 9, when the transmission 5 is not transmitting a torque, the relationship between the rotation speed of the engine 107 and the throttle opening forms a histerisis loop. The relationship indicated by the dotted line 'a' can be derived from an experiment or simulation using a computer, for example.

In the present embodiment, a strip-shape region located at a position farther inward than two straight lines that are in parallel to each other and abut against the dotted line 'a' (the region between a one-dot and dash line b and a one dot-and dash line c) is defined as a boundary region A, the region located below the one-dot and dash line b is defined as a driving region B, and the region located above the one-dot and dash line c is defined as a driven region C.

When the state of the engine 107 is determined, the rotation speed of the engine 107 is calculated based on a detection value of the crank sensor SE2. Which region out of the above-mentioned three regions the relationship between the engine 107 and the throttle opening is included is determined based on the calculated rotation speed and the detection value of the throttle sensor SE3. Thus, which state out of the driving state, the boundary state and the driven state the engine 107 is in is determined.

For example, the state where the rotation speed of the engine 107 is 6000 rpm and the throttle opening is 12 deg is included in the driving region B. In this case, it is determined that the engine 107 is in the driving state. Further, the state where the rotation speed of the engine 107 is 6000 rpm and the throttle opening is 2 deg is included in the driven region C. In this case, it is determined that the engine 107 is in the driven state. Further, the state where the rotation speed of the engine 107 is 6000 rpm and the throttle opening is 6 deg is included in the boundary region A. In this case, it is determined that the engine 107 is in the boundary state.

### [7] Engine 107 and Its Peripheral Member, and Control System of Motorcycle 100

Fig. 10 is a diagram showing a schematic configuration of the engine 107 and its peripheral members, and the control system of the motorcycle 100. As shown in Fig. 10, the engine 107 has a cylinder 71, and a piston 72 is provided in the cylinder 71 to be reciprocatable. Further, a combustion chamber 73 is formed in an upper portion of the cylinder 71. The combustion chamber 73 communicates with the outside of the engine 107 through an intake port 74 and an exhaust port 75.

An intake valve 76 is provided at an opening end 74a positioned in the downstream of the intake port 74 to be openable and closeable, and an exhaust valve 77 is provided at an opening end 75a positioned in the upstream of the exhaust port 75 to be openable and closeable. The intake valve 76 and the exhaust valve 77 are driven by a normal cam mechanism. An ignition plug 78 is provided in an upper portion of the combustion chamber 73.

The intake pipe 79 is attached to the engine 107 to be connected to the intake port 74, and the exhaust pipe 118 is attached to the engine 107 to be connected to the exhaust port 75. An injector 108 for supplying fuel into the cylinder 71 is provided in the intake pipe 79. Further, the ETV 82 is provided in the intake pipe 79.

When the engine 107 is in operation, air is taken into the combustion chamber 73 from the intake port 74 through the intake pipe 79, and the fuel is supplied into the combustion chamber 73 by the injector 108. Thus, a fuel-air mixture is generated in the combustion chamber 73, and spark ignition of the fuel-air mixture is carried out by the ignition plug 78. The burned gas generated by the combustion of the fuel-air mixture in the combustion chamber 73 is exhausted from the exhaust port 75 through the exhaust pipe 118.

In the ECU 50, the CPU executes the control program stored in the ROM as described above. Thus, functions of a storage 51, a load determiner 52, a time measurer 53, a shift determiner 54, a state determiner 55 and an output controller 56 are implemented. Part or all of the configurations of each function implemented in the ECU 50 may be implemented by hardware such as electronic circuits.

The storage 51 is constituted by part of storage regions of the ROM and the RAM, for example, and stores the first downshift threshold value TD1, the second downshift threshold value TD2, the first upshift threshold value TU1, the second upshift threshold value TU2 and the reference time length. Further, the storage 51 stores a plurality of reference angle values respectively corresponding to the plurality of gear positions of the transmission 5, and stores the above-mentioned driving state determination data.

The load determiner 52 determines whether the detection value of the load has exceeded the first downshift threshold value TD1, and determines whether the detection value of the load has exceeded the second downshift threshold value TD2, based on the output signal from the load sensor SE5. Further, the load determiner 52 determines whether the detection value of the load has exceeded the first upshift threshold value TU1, and determines whether the detection value of the load has exceeded the second upshift threshold value TU2.

The time measurer 53 measures the first operation time length from the time point at which the detection value of the load exceeds the first downshift threshold value TD1 until the time point at which the detection value of the load exceeds the second downshift threshold value TD2 based on a result of determination of the load determiner 52. Further, the time measurer 53 measures the second operation time length from the time point at which the detection value of the load exceeds the first upshift threshold value TU1 until the time point at which the detection value of the load exceeds the second upshift threshold value TU2 based on a result of determination of the load determiner 52.

The shift determiner 54 determines whether an operation of the shift pedal 210 by the rider is the shift operation intended by the rider based on a result of measurement of the time measurer 53. Specifically, the shift determiner 54 determines that the shift operation for the downshift has been performed when the first operation time length is equal to or shorter than the reference time length, and determines that the non-shift operation has been performed when the first operation time length is longer than the reference time length. Further, the shift determiner 54 determines that the shift-operation for the upshift has been performed when the second operation time length is equal to or shorter than the reference time length, and determines that the non-shift operation has been performed when the second operation time length is longer than the reference time length.

Further, when the shift operation is performed, the shift determiner 54 determines whether the change of the gear ratio has been completed based on an output signal from the shift-cam sensor SE4 and the plurality of reference angle values stored in the storage 51.

The state determiner 55 determines the state of the engine 107 based on an output signal from the crank sensor SE2, an output signal from the throttle sensor SE3 and the driving state determination data. When the shift operation is not performed, the output controller 56 adjusts the throttle opening of the ETV 82 based on an output signal from the accelerator sensor SE1. On the other hand, when the shift operation is performed without an operation of the clutch lever 105a, the output controller 56 carries out the output adjustment of the engine 107 according to the state of the engine 107.

The above-mentioned determination time length may be stored in the storage 51. In this case, in the case where a detection value of the load has been larger than each threshold value for the determination time length, the load determiner 52 determines that the detection value of the load has exceeded the threshold value.

### [8] Control Operation in ECU 50

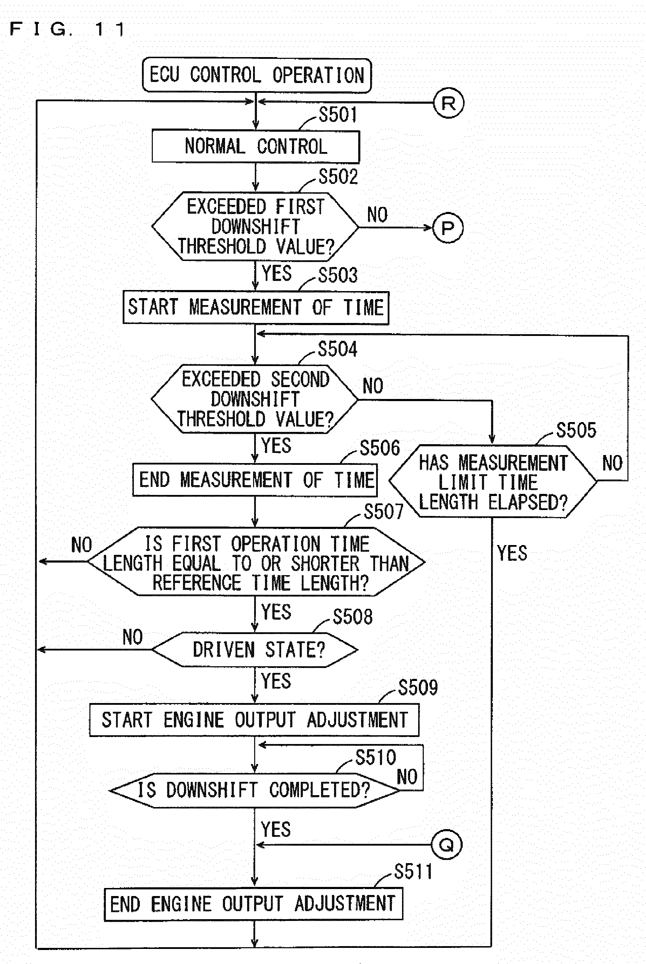

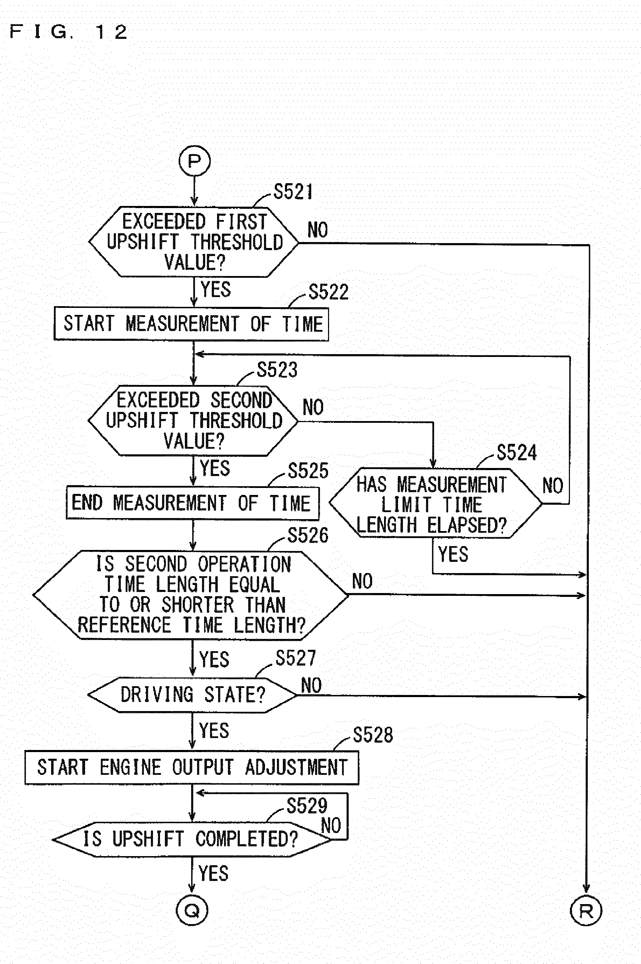

Figs. 11 and 12 are flow charts showing one example of the control operation in the ECU 50. The control operation described below is started when the engine 107 being in a stop state is operated, and ends when the engine 107 in an operation state is stopped.

When the control operation is started, the output controller 56 adjusts the throttle opening of the ETV 82 according to the accelerator opening detected by the accelerator sensor SE1 as normal control processing (step S501). Thus, the output of the engine 107 is adjusted to the value corresponding to the accelerator opening.

Next, the load determiner 52 determines whether a detection value of the load exceeds the first downshift threshold value TD1 (step S502). In the case where the detection value of the load exceeds the first downshift threshold value TD1, the time measurer 53 starts the measurement of time (step S503).

Thereafter, the load determiner 52 determines whether the detection value of the load exceeds the second downshift threshold value TD2 (step S504). In the case where the detection value of the load does not exceed the second downshift threshold value TD2, the load determiner 52 determines whether a predetermined measurement limit time length has elapsed after the measurement of time is started in the previous step S503 (step S505). The measurement limit time length is set longer than the reference time length and to be about several seconds.

In the step S505, when the measurement time length has not elapsed since the start of measurement, the load determiner 52 returns to the process of the step S504. On the other hand, when the measurement limit time length has elapsed since the start of measurement, the output controller 56 returns to the process of the step S501. Thus, determination of whether the shift operation has been performed returns to an initial state. At this time, the time measurer 53 ends the measurement of time.

In the step S504, when the detection value of the load has exceeded the second downshift threshold value TD2, the time measurer 53 ends the measurement of time, and determines that the time length from the start to the end of the measurement is the first operation time length (step S506).

Then, the shift determiner 54 determines whether the measured first operation time length is equal to or shorter than the reference time length (step S507). When the first operation time length is longer than the reference time length, the shift determiner 54 determines that the shift operation has not been performed, and the non-shift operation has been performed. As such, the output controller 56 returns to the process of the step S501.

On the other hand, when the first operation time length is equal to or shorter than the reference time length, the shift determiner 54 determines that the shift operation for the downshift has been performed. As such, the state determiner 55 determines whether the engine 107 is in the driven state (step S508).

In the step S508, when the engine 107 is in the driven state, the output controller 56 starts the output adjustment of the engine 107 for the downshift (step S509). In the output adjustment of the engine 107 for the downshift, the throttle opening of the ETV 82 is increased, for example. Thus, the output of the engine 107 is increased, and a torque generated in the crankshaft 2 is adjusted to be close to 0.

In the output adjustment of the step S509, the output of the engine 107 may be increased by an increase in amount of fuel injected by the injector 108 instead of an increase in throttle opening of the ETV 82. Alternatively, the output of the engine 107 may be increased by the change of an ignition time of the fuel-air mixture.

When the engine 107 is not in the driven state in the step S508, the output controller 56 returns to the process of the step S501. In this case, the output adjustment of the engine 107 is not carried out.

After the process of the step S509, the shift determiner 54 determines whether the downshift in the transmission 5 has completed based on an output signal of the shift cam sensor SE4 (step S510). The shift determiner 54 repeats the process of the step S510 until the downshift is completed. Thereafter, when the downshift is completed, the output controller 56 ends the output adjustment of the engine 107 (step S511), and returns to the process of the step S501.

In the above-mentioned step S502, when the detection value of the load has not exceeded the first downshift threshold value TD1, the load determiner 52 determines whether the detection value of the load has exceeded the first upshift threshold value TU1 (step S521). When the detection value of the load exceeds the first upshift threshold value TU1, the time measurer 53 starts the measurement of time (step S522).

Thereafter, the load determiner 52 determines whether the detection value of the load has exceeded the second upshift threshold value TU2 (step S523). When the detection value of the load has not exceeded the second upshift threshold value TU2, the load determiner 52 determines whether the predetermined measurement limit time length has elapsed after the measurement of time is started in the previous step S522 (step S524).

In the step S524, when the measurement limit time length has not elapsed since the measurement is started, the load determiner 52 returns to the process of the step S523. On the other hand, when the measurement limit time length has elapsed since the measurement is started, the output controller 56 returns to the process of the step S501. Thus, determination of whether the shift operation has been performed is returned to the initial state. At this time, the time measurer 53 ends the measurement of time.

In the step S523, when the detection value of the load exceeds the second upshift threshold value TU2, the time measurer 53 ends the measurement of time, and determines that the time length from the start to the end of the measurement is the second operation time length (step S525).

Then, the shift determiner 54 determines whether the measured second operation time length is equal to or shorter than the reference time length (step S526). When the second operation time length is longer than the reference time length, the shift determiner 54 determines that the shift operation has not been performed and the non-shift operation has been performed. As such, the output controller 56 returns to the process of the step S501.

On the other hand, when the second operation time length is equal to or shorter than the reference time length, the shift determiner 54 determines that the shift operation for the upshift has been performed. As such, the state determiner 55 determines whether the engine 107 is in the driving state (step S527).

In the step S527, when the engine 107 is in the driving state, the output controller 56 starts the output adjustment of the engine 107 for the upshift (step S528). In the output adjustment of the engine 107 for the upshift, ignition of a fuel-air mixture by the ignition plug 78 is stopped, for example. Thus, the output of the engine 107 is reduced, and the torque generated in the crankshaft 2 is adjusted to be close to 0.

In the output adjustment of the step S528, the output of the engine 107 may be reduced by a reduction in throttle opening of the ETV 82 or a reduction in amount of fuel injected by the injector 108 instead of the stop of ignition of the fuel-air mixture. Alternatively, the output of the engine 107 may be reduced by a change of the ignition time of the fuel-air mixture.

When the engine 107 is not in the driving state in the step S527, the output controller 56 returns to the process of the step S501. In this case, the output adjustment of the engine 107 is not carried out.

After the process of the step S528, the shift determiner 54 determines whether the upshift in the transmission 5 has been completed based on an output signal of the shift cam sensor SE4 (step S529). The shift determiner 54 repeats the process of the step S529 until the upshift is completed. Thereafter, when the upshift is completed, the output controller 56 proceeds to the process of the step S511, ends the output adjustment of the engine 107 and returns to the process of the step S501.

### [9] Effects of Embodiment

(a) During the shift operation, the rider tends to apply a relatively large load to the shift pedal 210 in a relatively short period of time. On the other hand, during the non-shift operation, the rider tends to apply a load to the shift pedal 210 relatively gently. Based on these tendencies, whether the shift operation intended by the rider has been performed is determined in the above-mentioned motorcycle 100.
   Specifically, the time length from the time when the detection value of the load detected by the load sensor SE5 exceeds the first downshift threshold value TD1 until the time when the detection value of the load detected by the load sensor SE5 exceeds the second downshift threshold value TD2 is measured as the first operation time length. When the first operation time length is equal to or shorter than the reference time length, it is determined that the operation of the shift pedal 210 by the rider is the shift operation for the downshift. On the other hand, when the first operation time length is longer than the reference time length, it is determined that the operation of the shift pedal 210 by the rider is the non-shift operation that is not intended by the rider.
   Further, the time length from the time when the detection value of the load detected by the load sensor SE5 exceeds the first upshift threshold value TU1 until the time when the detection value of the load detected by the load sensor SE5 exceeds the second upshift threshold value TU2 is measured as the second operation time length. When the second operation time length is equal to or shorter than the reference time length, it is determined that the operation of the shift pedal 210 by the rider is the shift operation for the upshift. On the other hand, when the second operation time length is longer than the reference time length, it is determined that the operation of the shift pedal 210 by the rider is the non-shift operation that is not intended by the rider.
   Thus, when the rider operates the shift pedal 210 without intending to switch the gear ratio of the transmission 5, the operation is prevented from being erroneously determined as the shift operation. Therefore, because whether the shift operation intended by the rider has been performed is accurately determined, the output adjustment of the engine 107 for the switch of the gear ratio of the transmission 5 can be appropriately carried out.
(b) In the above-mentioned example, the first downshift threshold value TD1 is set equal to or smaller than the minimum value of the dead zone. In this case, even when the load sensor SE5 having the dead zone is used, whether the detection value of the load has exceeded the first downshift threshold value TD1 can be accurately determined. Further, the first upshift threshold value TU1 is set equal to or larger than the maximum value of the dead zone. In this case, even when the load sensor SE5 having the dead zone is used, whether the detection value of the load has exceeded the first upshift threshold value TU1 can be accurately determined.

Thus, because it is not necessary to use an expensive sensor not having the dead zone, an increase in cost due to the load sensor is inhibited.

### [10] Other Embodiments

(a) While the load sensor SE5 is configured to be able to detect a compressive load and a tensile load applied to the first link shaft 221 in the above-mentioned embodiment, the present teaching is not limited to this. The load sensor SE5 may be configured to be able to detect only one of a compressive load and a tensile load.
   In this case, only the shift operation for one of the upshift and the downshift is a subject of determination. Thus, in the control operation of Figs. 11 and 12, it is not necessary to perform one of the process from the step S503 to S510 and the process from the step S522 to S529.
(b) In the above-mentioned embodiment, the upshift is carried out when the shift pedal 210 is lifted up, and the downshift is carried out when the shift pedal 210 is pushed down. However, the present teaching is not limited to this.
   The shift mechanism 7 may be configured such that the upshift is carried out when the shift pedal 210 is pushed down, and may be configured such that the downshift is carried out when the shift pedal 210 is lifted up. In this case, the first and second downshift threshold values TD1, TD2 are positive values, and the first and second upshift threshold values TU1, TU2 are negative values.
(c) In the above-mentioned embodiment, the output adjustment of the engine 107 for the downshift is not carried out when the engine 107 is in the driving state. However, the present teaching is not limited to this.
   Even when the engine 107 is in the driving state, the output adjustment of the engine 107 may be carried out based on the shift operation for the downshift. In this case, the output adjustment of the engine 107 may be carried out when the engine 107 is not in the boundary state.
   Further, in the above-mentioned embodiment, the output adjustment of the engine 107 for the upshift is not carried out when the engine 107 is in the driven state. However, the present teaching is not limited to this. Even when the engine 107 is in the driven state, the output of the engine 107 may be adjusted based on the shift operation for the upshift. In this case, the output adjustment of the engine 107 may be carried out when the engine 107 is not in the boundary state.
   When the output adjustment of the engine 107 for the downshift and the upshift can be carried out regardless of the state of the engine 107, the state determiner 55 of Fig. 10 is not required.
(d) While the load sensor SE5 has the dead zone in the above-mentioned embodiment, the load sensor SE5 does not have to have the dead zone.
(e) While the load sensor SE5 is provided at the first link shaft 221 in the above-mentioned embodiment, the present teaching is not limited to this. The load sensor SE5 may be able to directly or indirectly detect the load applied by the rider to the shift pedal 210. Therefore, the load sensor SE5 may be provided at the second link shaft 222 or the shift pedal 210 instead of the first link shaft 221.
(f) While the above-mentioned embodiment is an example in which the present teaching is applied to the motorcycle, the teaching is not limited to this. The present teaching may be applied to another straddled vehicle such as a four-wheeled automobile, a motor tricycle or an ATV (All Terrain Vehicle).

### [11] Reference Embodiment

A motorcycle according to the reference embodiment has the same configuration as that of the motorcycle according to the above-mentioned embodiment except for the following points.

In the motorcycle according to the reference embodiment, when the shift operation for the downshift is performed, and an engine 107 is in the driven state, an output controller 56 of an ECU 50 disconnects a clutch 3 temporarily instead of adjusting an output of the engine 107. Further, when the shift operation for the upshift is performed, and the engine 107 is in the driving state, the output controller 56 of the ECU 50 disconnects the clutch 3 temporarily instead of adjusting the output of the engine 107. In these cases, the gear ratio of the transmission 5 is smoothly switched by automatic disconnection of the clutch 3.

### [12] Correspondences between Constituent Elements in Claims and Parts in Preferred Embodiments

In the above-mentioned embodiment, the motorcycle 100 is an example of a straddled vehicle, the engine 107 is an example of an engine, the rear wheel 115 is an example of a drive wheel, the transmission 5 is an example of a transmission, the shift pedal 210 is an example of an operation member and a shift pedal, the load sensor SE5 is an example of a load sensor, the first downshift threshold value TD1 and the first upshift threshold value TU1 are an example of a first threshold value, and the second downshift threshold value TD2 and the second upshift threshold value TU2 are an example of a second threshold value.

Further, a configuration including the load determiner 52 and the time measurer 53 is an example of a measurer, the reference time length is an example of a first time length, a downshift reference time length and an upshift reference time length, the shift determiner 54 is an example of a shift determiner, the output controller 56 is an example of a controller, the load determiner 52 is an example of a load determiner and the determination time length is an example of a second time length.

Further, the direction in which the shift pedal 210 is pushed down as indicated by the thick dotted arrow SD1 in Fig. 4 is an example of a first direction, the direction in which the shift pedal 210 is lifted up as indicated by the thick one-dot and dash arrow SU1 in Fig. 4 is an example of a second direction, the compressive load is an example of a first load, and the tensile load is an example of a second load.

As each of constituent elements recited in the claims, various other elements having configurations or functions described in the claims can be also used.

## Claims

1. A straddled vehicle comprising:
an engine (107);
a drive wheel (115);
a transmission (5) configured to transmit a torque generated by the engine (107) to the drive wheel (115);
an operation member (210) configured to be operated by a rider in order to switch a gear ratio of the transmission (5);
a load sensor (SE5) configured to detect a load applied to the operation member (210) by the rider;
a measurer (53) configured to measure a time length from a time point at which the load detected by the load sensor (SE5) exceeds a first threshold value (TD1,TU1);
a shift determiner (54) configured to determine that an operation of the operation member (210) by the rider is a shift operation for switching the gear ratio of the transmission (5); and
a controller (56) configured to adjust an output of the engine (107) in order to switch the gear ratio of the transmission (5) when the shift determiner (54) determines that the operation of the operation member (210) by the rider is the shift operation,
**characterized in that**
the measurer (53) is configured to measure the time length from a time point at which the load detected by the load sensor (SE5) exceeds a first threshold value (TD1,TU1) until a time point at which the load detected by the load sensor (SE5) exceeds a second threshold value (TD2,TU2) larger than the first threshold value (TD1,TU1) as an operation time length;
the shift determiner (54) is configured to determine that an operation of the operation member (210) by the rider is a shift operation for switching the gear ratio of the transmission (5) when the operation time length measured by the measurer (53) is equal to or shorter than a first time length, and configured to determine that the operation of the operation member (210) by the rider is not the shift operation when the operation time length measured by the measurer (53) is longer than the first time length.

2. The straddled vehicle according to claim 1, **characterized in that** the load sensor (SE5) has a dead zone, and
an absolute value of the first threshold value (TD1,TU1) is equal to or larger than an absolute value of a maximum value of the dead zone.

3. The straddled vehicle according to claim 1 or 2, **characterized in that** the measurer (53) includes a load determiner (52) configured to determine that the load detected by the load sensor (SE5) has exceeded the second threshold value (TD2,TU2) when the load detected by the load sensor (SE5) has been larger than the second threshold value (TD2,TU2) for a second time length that is shorter than the first time length.

4. The straddled vehicle according to any one of claims 1 to 3, **characterized in that** the operation member (210) is configured to be operable by the rider in a first direction for a downshift of the transmission (5), and is configured to be operable by the rider in a second direction that is different from the first direction for an upshift of the transmission (5),
the load sensor (SE5) is configured to detect a load applied in the first direction as a first load, and is configured to detect a load applied in the second direction as a second load,
the first threshold value includes a first downshift threshold value (TD1) and a first upshift threshold value (TU1),
the second threshold value includes a second downshift threshold value (TD2) and a second upshift threshold value (TU2),
the first time length includes a downshift reference time length and an upshift reference time length,
the measurer (53) is configured to measure a time length from a time point at which the first load detected by the load sensor (SE5) exceeds the first downshift threshold value (TD1) until a time point at which the first load detected by the load sensor (SE5) exceeds the second downshift threshold value (TD2) as a first operation time length, and to measure a time length from a time point at which the second load detected by the load sensor (SE5) exceeds the first upshift threshold value (TU1) until a time point at which the second load detected by the load sensor (SE5) exceeds the second upshift threshold value (TU2) as a second operation time length, and
the shift determiner (54) is configured to,
determine that the operation of the operation member (210) by the rider is a shift operation for the downshift when the first operation time length measured by the measurer (53) is equal to or shorter than the downshift reference time length,
determine that the operation of the operation member (210) by the rider is not the shift operation for the downshift when the first operation time length measured by the measurer (53) is longer than the downshift reference time length,
determine that the operation of the operation member (210) by the rider is a shift operation for the upshift when the second operation time length measured by the measurer (53) is equal to or shorter than the upshift reference time length, and
determine that the operation of the operation member (210) by the rider is not the shift operation for the upshift when the second operation time length measured by the measurer (53) is longer than the upshift reference time length.

5. The straddled vehicle according to any one of claims 1 to 4, **characterized in that** the operation member is a shift pedal (210).

## Patentansprüche

1. Ein Spreiz-Sitz-Fahrzeug, das umfasst:
einen Motor (107);
ein Antriebs-Rad (115);
ein Getriebe (5) konfiguriert, um einen Moment, erzeugt durch den Motor (107), auf das Antriebs-Rad (115) zu übertragen;
ein Betätigungs-Element (210) konfiguriert, um durch einen Fahrer betätigt zu werden, um ein Übersetzungs-Verhältnis des Getriebes (5) zu schalten;
einen Last-Sensor (SE5) konfiguriert, um eine Last, aufgebracht auf das Betätigungs-Element (210) durch den Fahrer, zu erfassen;
einen Messer (53) konfiguriert, um eine Zeit-Länge von einem Zeit-Punkt, an dem die Last, erfasst durch den Last-Sensor (SE), einen ersten Grenzwert (TD1, TU1) überschreitet, zu messen;
einen Schalt-Bestimmer (54) konfiguriert, um zu bestimmen, das eine Betätigung von dem Betätigungs-Element (210) durch den Fahrer eine Schalt-Betätigung zum Schalten des Übersetzungs-Verhältnisses des Getriebes (5) ist; und
eine Steuerung (56) konfiguriert, um eine Abgabe des Motors (107) einzustellen, um das Übersetzungs-Verhältnis von dem Getriebe (5) zu schalten, wenn der Schalt-Bestimmer (54) bestimmt, dass die Betätigung des Betätigungs-Elements (210) durch den Fahrer eine Schalt-Betätigung ist, **dadurch gekennzeichnet, dass** der Messer (53) konfiguriert ist, um die Zeit-Länge von einem Zeit-Punkt zu messen, an dem die Last, erfasst durch den Last-Sensor (SE5), einen ersten Grenzwert (TD1, TU1) überschreitet, bis zu einem Zeit-Punkt, an dem die Last, erfasst durch den Last-Sensor (SE1), einen zweiten Grenzwert (TD2, TU2), größer als den ersten Grenzwert (TD1, TU1), überschreitet, als eine Betätigungs-Zeit-Länge, zu messen;
der Schalt-Bestimmer (54) ist konfiguriert, um zu bestimmen, dass eine Betätigung des Betätigungs-Elements (210) durch den Fahrer eine Schalt-Betätigung zum Schalten des Übersetzungs-Verhältnisses des Getriebes (5) ist, wenn die Betätigungs-Zeit-Länge, gemessen durch den Messer (53), gleich oder kürzer als eine erste Zeit-Länge ist, und ist konfiguriert zu bestimmen, dass die Betätigung des Betätigungs-Elements (210) durch den Fahrer keine Schalt-Betätigung ist, wenn die Betätigungs-Zeit-Länge, gemessen durch den Messer (53), länger als die erste Zeit-Länge ist.

2. Das Spreiz-Sitz-Fahrzeug gemäß Anspruch 1, **dadurch gekennzeichnet, dass** der Last-Sensor (SE5) eine Tod-Zone hat, und ein absoluter Wert von dem ersten Grenzwert (TD1, TU1) gleich oder größer als ein absoluter Wert von einem Maximalwert von der Tod-Zone ist.

3. Das Spreiz-Sitz-Fahrzeug gemäß Anspruch 1 oder 2, **dadurch gekennzeichnet, dass** der Messer (53) einen Last-Bestimmer (52) beinhaltet, der konfiguriert ist, um zu bestimmen, dass die Last, erfasst durch den Last-Sensor (SE5), den zweiten Grenzwert (TD2, TU2) überschritten hat, wenn die Last, erfasst durch den Last-Sensor (SE2), größer gewesen ist als der zweite Grenzwert (TD2, TU2), für eine zweite Zeit-Länge, die kürzer ist als die erste Zeit-Länge.

4. Das Spreiz-Sitz-Fahrzeug gemäß zu irgendeinem der Ansprüche 1 bis 3, **dadurch gekennzeichnet, dass** das Betätigungs-Element (210) konfiguriert ist, um durch den Fahrer betätigt zu werden, in eine erste Richtung für ein Herunter-Schalten des Getriebes (5) und konfiguriert ist, um durch den Fahrer betätigt zu werden, in eine zweite Richtung, die unterschiedlich ist von der ersten Richtung, für ein Hoch-Schalten des Getriebes (5),
der Last-Sensor (SE5) ist konfiguriert, um eine Last, aufgebracht in der ersten Richtung, als eine erste Last zu erfassen, und ist konfiguriert, um eine Last, aufgebracht in der zweiten Richtung, als eine zweite Last zu erfassen,
der erste Grenzwert beinhaltet einen ersten Herunter-Schalt-Grenzwert (TD1) und einen ersten Hoch-Schalt-Grenzwert (TU1),
der zweite Grenzwert beinhaltet einen zweiten Herunter-Schalt-Grenzwert (TD2) und einen zweiten Hoch-Schalt-Grenzwert (TU2),
die erste Zeit-Länge beinhaltet eine Herunter-Schalt-Referenz-Zeit-Länge und eine Hoch-Schalt-Referenz-Zeit-Länge,
der Messer (53) ist konfiguriert, um eine Zeit-Länge von einem Zeit-Punkt zu messen, an dem die erste Last, erfasst durch den Last-Sensor (SE5), den ersten Herunter-Schalt-Grenzwert (TD1) überschreitet, bis zu einem Zeit-Punkt, an dem die erste Last, erfasst durch den Last-Sensor (SE5), den zweiten Herunter-Schalt-Grenzwert (TD2) überschreitet, als eine erste Betätigungs-Zeit-Länge, und um eine Zeit-Länge von einem Zeit-Punkt zu messen, an dem die zweite Last erfasst, durch den Last-Sensor (SE5), den ersten Hoch-Schalt-Grenzwert (TU1) überschreitet, bis zu einem Zeit-Punkt, an dem die zweite Last, erfasst durch den Last-Sensor (SE5), den zweiten Hoch-Schalt-Grenzwert (TU2) überschreitet, als eine zweite BetätigungsZeit-Länge, und
der Schalt-Bestimmer (54) ist konfiguriert, um,
zu bestimmen, dass die Betätigung des Betätigungs-Elements (210) durch den Fahrer eine Schalt-Betätigung für das Herunter-Schalten ist, wenn die erste Betätigungs-Zeit-Länge, gemessen durch den Messer (53), gleich oder kürzer ist als die Herunter-Schalt-Referenz-Zeit-Länge,
zu bestimmen, dass die Betätigung des Betätigungs-Elements (210) durch den Fahrer keine Schalt-Betätigung zu dem Herunter-Schalten ist, wenn die erste Betätigungs-Zeit-Länge, gemessen durch den Messer (53),I länger als die Herunter-Schalt-Referenz-Zeit-Länge ist,
zu bestimmen, dass die Betätigung des Betätigungs-Elements (210) durch den Fahrer eine Betätigung für das Hoch-Schalten ist, wenn die zweite Betätigungs-Zeit-Länge, gemessen durch den Messer (53), gleich oder kürzer ist als die Hoch-Schalt-Referenz-Zeit-Länge, und
zu bestimmen, dass die Betätigung des Betätigungs-Elements (210) durch den Fahrer keine Schalt-Betätigung für das Hoch-Schalten ist, wenn die zweite Betätigungs-Zeit-Länge, gemessen durch den Messer (53), länger als die Hoch-Schalt-Referenz-Zeit-Länge ist.

5. Das Spreiz-Sitz-Fahrzeug gemäß zu irgendeinem der Ansprüche 1 bis 4, **dadurch gekennzeichnet, dass** das Betätigungs-Element ein Schalt-Pedal (210) ist.

## Revendications

1. Véhicule à enfourcher comprenant :
un moteur (107) ;
une roue motrice (115) ;
une transmission (5) configurée pour transmettre un couple généré par le moteur (107) à la roue motrice (115) ;
un élément d'actionnement (210) configuré pour être actionné par un conducteur de manière à commuter le rapport de la transmission (5) ;
un capteur de charge (SE5) configuré pour détecter la charge appliquée à l'élément d'actionnement (210) par le conducteur ;
un dispositif de mesure (53) configuré pour mesurer une durée depuis un point temporel où la charge détectée par le capteur de charge (SE5) dépasse une première valeur seuil (TD1, TU1) ;
un dispositif de détermination de changement de rapport (54) configuré pour déterminer qu'un actionnement de l'élément d'actionnement (210) par le conducteur est une opération de changement de rapport pour commuter le rapport de la transmission (5) ; et
un contrôleur (56) configuré pour régler la sortie du moteur (107) de manière à commuter le rapport de la transmission (5) quand le dispositif de détermination de changement de rapport (54) détermine que l'actionnement de l'élément d'actionnement (210) par le conducteur est l'opération de changement de rapport,
**caractérisé**
**en ce que** le dispositif de mesure (53) est configuré pour mesurer la durée depuis un point temporel où la charge détectée par le capteur de charge (SE5) dépasse une première valeur seuil (TD1, TU1) jusqu'à un point temporel où la charge détectée par le capteur de charge (SE5) dépasse une deuxième valeur seuil (TD2, TU2) supérieure à la première valeur seuil (TD1, TU1) comme une durée d'actionnement ;
le dispositif de détermination de changement de rapport (54) est configuré pour déterminer qu'un actionnement de l'élément d'actionnement (210) par le conducteur est une opération de changement de rapport pour commuter le rapport de la transmission (5) quand la durée d'actionnement mesurée par le dispositif de mesure (53) est inférieure ou égale à une première durée, et configuré pour déterminer que l'actionnement de l'élément d'actionnement (210) par le conducteur n'est pas l'opération de changement de rapport quand la durée d'actionnement mesurée par le dispositif de mesure (53) est supérieure à la première durée.

2. Véhicule à enfourcher selon la revendication 1, **caractérisé en ce que** le capteur de charge (SE5) comporte une plage morte, et
la valeur absolue de la première valeur seuil (TD1, TU1) est supérieure ou égale à la valeur absolue d'une valeur maximale de la plage morte.

3. Véhicule à enfourcher selon la revendication 1 ou 2, **caractérisé en ce que** le dispositif de mesure (53) comprend un dispositif de détermination de charge (52) configuré pour déterminer que la charge détectée par le capteur de charge (SE5) a dépassé la deuxième valeur seuil (TD2, TU2) quand la charge détectée par le capteur de charge (SE5) a été supérieure à la deuxième valeur seuil (TD2, TU2) pendant une deuxième durée inférieure à la première durée.

4. Véhicule à enfourcher selon l'une quelconque des revendications 1 à 3, **caractérisé en ce que** l'élément d'actionnement (210) est configuré pour être actionnable par le conducteur dans une première direction pour une descente de rapport de la transmission (5), et est configuré pour être actionnable par le conducteur dans une deuxième direction différente de la première direction pour une montée de rapport de la transmission (5),
le capteur de charge (SE5) est configuré pour détecter une charge appliquée dans la première direction comme une première charge, et est configuré pour détecter une charge appliquée dans la deuxième direction comme une deuxième charge,
la première valeur seuil comprend une première valeur seuil de descente de rapport (TD1) et une première valeur seuil de montée de rapport (TU1),
la deuxième valeur seuil comprend une deuxième valeur seuil de descente de rapport (TD2) et une deuxième valeur seuil de montée de rapport (TU2),
la première durée comprend une durée de référence de descente de rapport et une durée de référence de montée de rapport,
le dispositif de mesure (53) est configuré pour mesurer une durée depuis un point temporel où la première charge détectée par le capteur de charge (SE5) dépasse la première valeur seuil de descente de rapport (TD1) jusqu'à un point temporel où la première charge détectée par le capteur de charge (SE5) dépasse la deuxième valeur seuil de descente de rapport (TD2) comme une première durée d'actionnement, et pour mesurer une durée depuis un point temporel où la deuxième charge détectée par le capteur de charge (SE5) dépasse la première valeur seuil de montée de rapport (TU1) jusqu'à un point temporel où la deuxième charge détectée par le capteur de charge (SE5) dépasse la deuxième valeur seuil de montée de rapport (TU2) comme une deuxième durée d'actionnement, et
le dispositif de détermination de changement de rapport (54) est configuré pour
déterminer le fait que l'actionnement de l'élément d'actionnement (210) par le conducteur est une opération de changement de rapport pour la descente de rapport quand la première durée d'actionnement mesurée par le dispositif de mesure (53) est inférieure ou égale à la durée de référence de descente de rapport,
déterminer que l'actionnement de l'élément d'actionnement (210) par le conducteur n'est pas l'opération de changement de rapport pour la descente de rapport quand la première durée d'actionnement mesurée par le dispositif de mesure (53) est supérieure à la durée de référence de descente de rapport,
déterminer que l'actionnement de l'élément d'actionnement (210) par le conducteur est une opération de changement de rapport pour la montée de rapport quand la deuxième durée d'actionnement mesurée par le dispositif de mesure (53) est inférieure ou égale à la durée de référence de montée de rapport, et
déterminer que l'actionnement de l'élément d'actionnement (210) par le conducteur n'est pas l'opération de changement de rapport pour la montée de rapport quand la deuxième durée d'actionnement mesurée par le dispositif de mesure (53) est supérieure à la durée de référence de montée de rapport.

5. Véhicule à enfourcher selon l'une quelconque des revendications 1 à 4, **caractérisé en ce que** l'élément d'actionnement est une pédale de changement de rapport (210).
